# FASCICULE DE BREVET EUROPEEN

(11) **EP 1 960 677 B1**
(45) Date de publication et mention de la délivrance du brevet: **26.08.2009**
(21) Numéro de dépôt: 06806708.1
(22) Date de dépôt: 08.11.2006
(51) Int. Cl.: F16B 21/02, F16B 5/10

(54) **DISPOSITIF D'ASSEMBLAGE DE DEUX PLAQUES**
VORRICHTUNG ZUM VERBINDEN ZWEIER PLATTEN
DEVICE FOR JOINING TWO PLATES

(30) Priorité: 05.12.2005 FR 0512302
(43) Date de publication de la demande: 27.08.2008
(73) Titulaire: A. RAYMOND ET CIE, 38000 Grenoble (FR)
(72) Inventeur: GIRAUD, Sylvain, F-38130 Echirolles (FR)
(74) Mandataire: Rüttgers, Joachim
(86) Numéro de dépôt international: PCT/EP2006/010688
(87) Numéro de publication internationale: WO 2007/065520

(56) Documents cités:
- DE-C1- 19 908 010
- US-A- 4 762 437
- US-A1- 2004 126 183

## Description

### Domaine technique de l'invention

L'invention concerne un dispositif d'assemblage d'une première plaque et d'une deuxième plaque superposée, conforme au préambule de la revendication 1 et tel que décrit dans le document DE 199 08 010 C1.

### Etat de la technique

Dans de nombreux domaines, notamment l'automobile, il est nécessaire d'assembler deux pièces entre elles dans une zone où deux plaques, respectivement solidaires de l'une des deux pièces, sont superposées. Généralement, les plaques comportent des orifices traversants destinés à être alignés lors de l'assemblage. Un dispositif d'assemblage est ensuite rapporté dans les orifices pour assurer l'assemblage des deux plaques. De tels dispositifs d'assemblage doivent être conçus pour favoriser un montage rapide et facile, souvent en aveugle, au sein de structures mécaniques peu accessibles, et pour garantir un maintien fiable des plaques.

Des dispositifs de l'art antérieur sont déjà susceptibles de remplir ces fonctions, par exemple un système vis/écrou. Mais ce type de dispositif d'assemblage reste difficile à mettre en oeuvre car il est nécessaire, lors du montage, de maintenir les deux plaques l'une contre l'autre, tout en insérant la vis et en boulonnant l'écrou jusqu'à serrage. La complexité mécanique importante rend difficile la mise en oeuvre de ce dispositif au sein d'une ligne de production automatisée.

Le document FR-2851802 décrit, quant à lui, un dispositif d'assemblage avec une tête et un corps, la tête ayant une butée transversale apte à prendre appui sur la deuxième plaque, et le corps ayant une première entretoise et une deuxième entretoise coaxiales et disposées dans le prolongement l'une de l'autre. La première entretoise, adjacente à la tête, présente un diamètre supérieur à celui de la deuxième entretoise, chacune des entretoises étant munie d'au moins un ergot. Après insertion du corps dans la deuxième plaque, puis dans la première plaque, les plaques étant maintenues suivant une distance déterminée, l'opérateur pratique une rotation du corps d'un quart de tour. La première plaque est alors coincée entre les ergots des première et deuxième entretoises et la deuxième plaque entre la tête et l'ergot de la première entretoise. Le principe des ergots fixés sur les entretoises autorise le verrouillage du dispositif d'assemblage sur la première pièce et sur la deuxième pièce, simultanément, par une simple rotation du corps.

Bien que ce dispositif connu de l'art antérieur assure l'assemblage et l'entretoisement des plaques, il est difficile à mettre en oeuvre par le nombre d'opérations simultanées. Il nécessite de maintenir les deux plaques l'une contre l'autre ou espacées suivant une distance déterminée, et simultanément d'insérer puis tourner le dispositif. Or, les opérations d'alignement des orifices, de maintien des plaques, d'insertion et de rotation du dispositif sont des opérations délicates et pénibles à regrouper pour un seul opérateur, ce qui a pour conséquence directe d'abaisser les cadences d'assemblage.

De plus, avec le dispositif précédent, chacune des plaques est maintenue sur une de ses faces par une surface ou une butée transversale, et sur l'autre de ses faces par les ergots disposés respectivement sur les première et deuxième entretoises. Chaque plaque étant maintenue entre des éléments axialement fixes du dispositif d'assemblage, les plaques sont simplement entretoisées, mais le maintien des plaques n'est pas fiable, ce qui risque d'engendrer des désagréments esthétiques ou mécaniques comme des vibrations.

### Objet de l'invention

L'invention a pour but de pallier à ces inconvénients en proposant un dispositif d'assemblage de deux plaques qui soit d'un montage aisé et garantissant un maintien fiable des plaques.

Selon l'invention, ce but est atteint par la combinaison de caractéristiques de la revendication 1.

La présence combinée des moyens de clipsage de la première plaque et des moyens de retenue de la deuxième plaque permet d'assurer un préassemblage des plaques entre elles pour que l'opérateur puisse, dans un second temps, librement verrouiller l'assemblage par rotation du corps allongé sans avoir à maintenir les deux plaques.

On comprend bien que ce type de dispositif d'assemblage permet donc une simplification de l'opération de montage car il permet de scinder l'opération en deux étapes distinctes : le préassemblage des plaques entre elles, et le verrouillage proprement dit. Cette différentiation permet de rendre très simple chaque étape grâce à des moyens facilement mis en oeuvre.

Dans certaines variantes préférées, l'agencement des moyens de clipsage autorise le préassemblage de la première plaque avant le préassemblage de la deuxième plaque. Cette caractéristique permet encore une simplification de l'opération de montage en scindant l'étape de préassemblage des plaques entre elles en deux sous-étapes successives : le préassemblage de la première plaque grâce aux moyens de clipsage évitant tout risque de perte du dispositif d'assemblage, puis le préassemblage de la deuxième plaque grâce aux moyens de retenue.

D'autre part, de tels moyens de serrage permettent au dispositif d'assemblage de maintenir de manière fiable les plaques selon un positionnement relatif prédéterminé avec une mise sous contrainte permanente et élevée. Tout risque de jeu dans l'assemblage après verrouillage est donc supprimé.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est une vue en perspective d'un exemple de dispositif d'assemblage selon l'invention,
- la figure 2 est une vue de face du dispositif d'assemblage de la figure 1,
- la figure 3 est une vue de face du dispositif de la figure 1 après le préassemblage avec une première plaque,
- la figure 4 est une vue de face du dispositif de la figure 3 après le préassemblage avec une deuxième plaque,
- la figure 5 est une vue de côté du dispositif de la figure 4 après le verrouillage de l'assemblage,
- la figure 6 est une vue en coupe transversale du dispositif de la figure 5, suivant le plan de coupe VI-VI'.

### Description de modes particuliers de réalisation

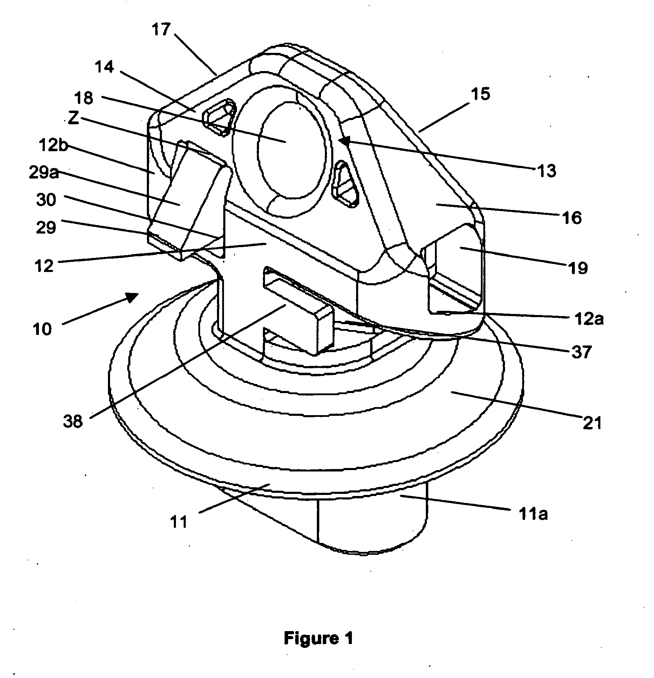

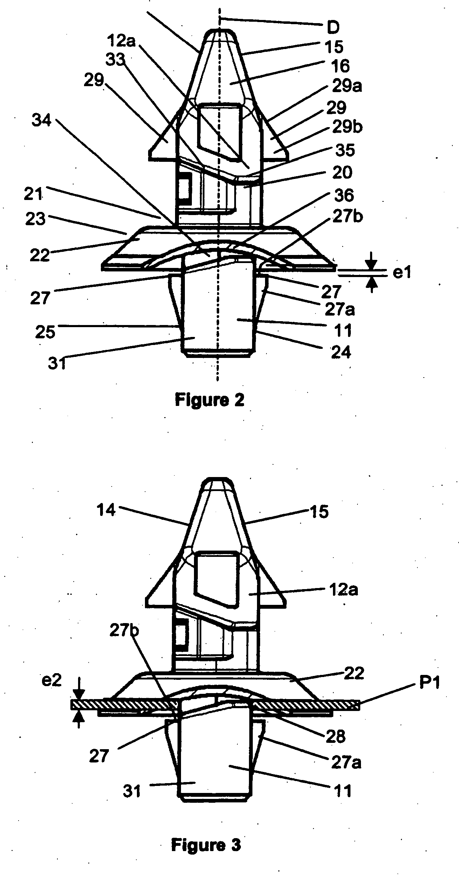

L'exemple de dispositif d'assemblage visible seul sur les figures 1 et 2 comporte un corps allongé 10 muni d'un pied 11 et d'une tête 12. La tête 12 est destinée à la manipulation du dispositif de fixation et présente une section oblongue avec une première et une deuxième extrémités extérieures, respectivement référencées 12a et 12 b. De même, le pied 11 est de section oblongue avec une première extrémité extérieure 11a et une deuxième extrémité extérieure 11 b. Le pied 11 et la tête 12 sont disposées coaxialement, leur axe commun D définissant la direction axiale dans laquelle s'étend le dispositif d'assemblage.

Des moyens de manipulation sont également prévus sur la tête 12, avec une languette 13 de préhension, car le dispositif de fixation est prévu, dans l'exemple, pour être manipulé à la main. La languette 13 présente à cet effet deux faces latérales 14, 15 convergeant l'une vers l'autre de sorte à être saisie de manière optimale entre le pouce et l'index de l'utilisateur.

Les extrémités extérieures 12a, 12b comportent chacune une portion biseautée, respectivement 16 et 17, convergeant l'une vers l'autre. Un évidement central 18, et un évidement latéral 19 dans chaque extrémité extérieure 12a, 12b, sont agencés dans la tête 12 pour un gain de matière.

La jonction 20 entre le pied 11 et la tête 12 comporte un disque transversal 21 dont le pourtour est muni d'une collerette 22 saillante. La collerette 22 est formée d'une paroi tronconique 23 délimitant un cercle de plus petit diamètre et un cercle de plus grand diamètre, le cercle de plus petit diamètre étant rattaché au bord du disque transversal 21 et le cercle de plus grand diamètre étant positionné autour de l'extrémité proximale du pied 11. On entend par extrémité proximale du pied 11 l'extrémité rattaché à la jonction 20. L'autre extrémité du pied 11 est nommée extrémité distale. Comme l'illustre la figure 2, la collerette 22 forme ainsi une surface tronconique s'évasant depuis le disque 21 en direction du pied 11.

Par ailleurs, la collerette 22 est constituée d'un matériau élastique rendant possible sa déformation lorsqu'un effort tendant à rapprocher le cercle de plus grand diamètre vers le plan du disque transversal 21, lui est appliqué.

Les faces latérales 24, 25 de la portion centrale du pied 11 comportent chacune une lumière 26 pour le dégagement d'une ailette de maintien 27 obtenue dans un matériau élastiquement déformable, et raccordée au pied 11 sur l'arête inférieure de la lumière 26 correspondante. Les ailettes dé maintien 27 sont donc mobiles dans la direction transversale, c'est-à-dire en direction de l'axe D. Chaque ailette de maintien 27 fait saillie de la face latérale 24, 25 correspondante, avec une portion inclinée 27a et une portion transversale 27b. La portion inclinée 27a s'étend en direction de l'extrémité distale du pied 11 en s'approchant de l'axe. D. La portion transversale 27b s'étend parallèlement au plan du disque transversal 21 avec un décalage axial e1, au repos, par rapport au cercle de plus grand diamètre de la collerette 22.

La tête 12 comporte deux ergots 29 transversaux. Dans l'exemple, les ergots 29 viennent en saillie des faces latérales de la tête 12 avec une portion inclinée 29a et une portion transversale 29b. La portion inclinée 29a s'étend en direction de la languette 13 de la tête 12 en s'approchant de l'axe D. La portion transversale 29b s'étend parallèlement au plan du disque transversal 21. Chaque ergot 29 s'étend à l'embouchure d'un évidement 30 pratiqué dans les faces latérales de la tête 12, partiellement dans les faces latérales 14, 15 de la languette 13. Chaque ergot 29 est relié à la tête 12 par une zone de jonction Z déformable élastiquement prévue le long de l'arête supérieure de l'embouchure de l'évidement 30, c'est-à-dire l'arête à partir de laquelle s'étend la portion inclinée 29a. Les ergots 29 sont donc mobiles dans la direction transversale pour venir s'insérer dans le logement 30 correspondant.

En référence aux figures suivantes, le dispositif d'assemblage précédent est destiné à assembler rigidement une première plaque P1 et une deuxième plaque P2 de la manière indiquée plus loin. Les plaques P1 et P2 sont généralement solidaires, chacune, d'une pièce respective, lesdites pièces (non représentées) étant destinées à être assemblées entre elles dans une zone où les plaques P1 et P2 se superposent.

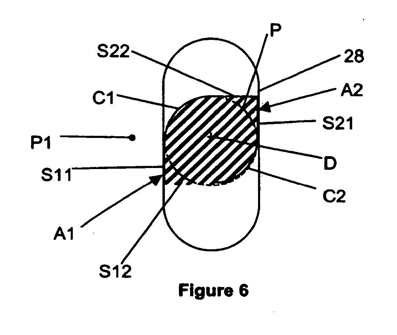

La première plaque P1, dont l'épaisseur e2 est légèrement supérieure au décalage axial e1, comporte un orifice 28 traversant (figure 6) ayant une forme oblongue correspondant à la section du pied 11, avec des dimensions légèrement supérieures pour déterminer un jeu de montage. Cette configuration de l'orifice 28 permet d'introduire le pied 11 dans l'orifice 28 à partir de son extrémité distale en direction de l'extrémité proximale. Le pied 11 comporte un chanfrein 31 à son extrémité distale pour faciliter l'entrée du pied 11 dans l'orifice 28. Pendant le coulissement du pied 11 dans la plaque P1, les ailettes de maintien 27 se plient vers la direction transversale tandis que le contour de l'orifice 28 glisse le long des portions inclinées 27a, jusqu'à ce que l'une des faces de la plaque P1 vienne en contact avec la collerette 22 qui constitue une butée axiale. Comme le décalage axial e1 est inférieur à l'épaisseur e2 de la plaque P1, les portions transversales 27b des ailettes de maintien 27 s'étendent alors dans l'épaisseur e2 de la plaque P1. Par une augmentation de l'effort d'insertion suivant la direction axiale, le pied 11 progresse tandis que la collerette 22 se déforme légèrement, jusqu'à autoriser le retour élastique des ailettes de maintien 27. Les portions transversales 27b sont alors en contact avec l'autre face de la plaque P1. Comme l'illustre en particulier la figure 3, la collerette 22 et les ailettes de maintien 27 constituent donc des moyens de clipsage du pied 11 sur la première plaque P1 pour son préassemblage. La légère déformation de la collerette 22 garantit un maintien ferme et temporaire du dispositif d'assemblage sur la première plaque P1 grâce à un léger effort de serrage de la plaque P1. Ce préassemblage de la plaque P1 sur le dispositif d'assemblage constitue une première sous-étape de l'étape de préassemblage des plaques P1 et P2 entre elles. Tous les dispositifs d'assemblage nécessaires à l'assemblage final pourront être installés sur la première plaque P1 avant l'assemblage de la deuxième plaque P2, sans risque de perte grâce aux moyens de clipsage. Cette caractéristique est très intéressant pour les montages dans les zones peu accessibles.

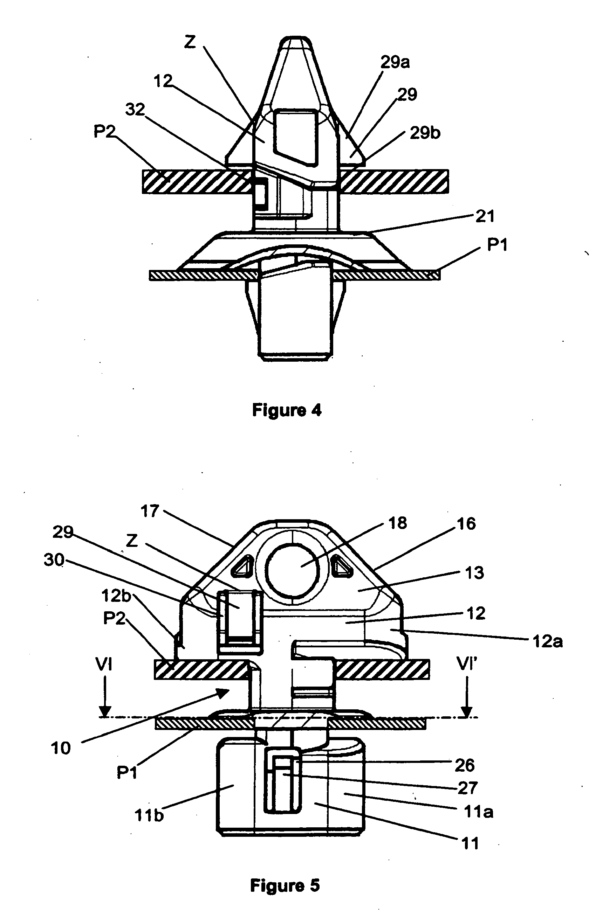

En référence à la figure 4, dans une deuxième sous-étape de l'étape de préassemblage des plaques P1 et P2 entre elles, la tête 12 est engagée dans un orifice 32 traversant aménagé dans la plaque P2. L'orifice 32 présente une forme oblongue correspondant à la section de la tête 12, avec des dimensions légèrement supérieures pour déterminer un jeu de montage. Les portions biseautées 16, 17 de la tête 12 facilitent son entrée dans l'orifice 32 lorsque la direction générale d'entrée et d'insertion du corps allongé 10 dans la plaque P2 n'est pas alignée avec l'axe D. Lors du coulissement de la tête 12 dans la plaque P2, les ergots 29 viennent se loger progressivement dans leur logement 30 en pivotant au niveau de la zone de jonction Z tandis que le contour de l'orifice 32 glisse le long des portions inclinées 29a. Lorsque les ergots 29 sont libérés de l'orifice 32, ceux-ci reviennent dans leur configuration naturelle par retour élastique. Les portions transversales 29b constituent alors des moyens de retenue de la plaque P2, qui est maintenue axialement contre les ergots 29. La sous-étape précédemment décrite constitue le préassemblage de la plaque P2 sur le dispositif d'assemblage.

La combinaison de la sous-étape de préassemblage de la plaque P1 et de la sous-étape de préassemblage de la plaque P2 constitue l'étape où les plaques P1 et P2 sont préassemblées entre elles. Il va de soi que le préassemblage de la deuxième plaque P2 grâce aux moyens de retenue peut être réalisé avant le préassemblage de la première plaque P1 grâce aux moyens de clipsage, sans sortir du cadre de l'invention.

Dans une deuxième étape, l'utilisateur doit imprimer une rotation d'un quart de tour au corps allongé 10 en tenant la languette 13 entre le pouce et l'index. Cette étape peut donc être réalisée en aveugle. Une fois le quart de tour de verrouillage effectué, le dispositif d'assemblage est en place sur les plaques P1 et P2 comme représenté à la figure 5. Les extrémités extérieures 11 a, 11 b du pied 11 constituent des butées axiales pour la première plaque P1 de part et d'autre de son orifice 28, et les extrémités extérieures 12a, 12b de la tête 12 constituent des butées axiales pour la deuxième plaque P2 de part et d'autre de son orifice 32, suivant une direction opposée. L'assemblage est alors verrouillé.

Avant le verrouillage et après le préassemblage des plaques P1 et P2, le maintien des plaques P1 et P2 entre elles n'est pas fiable car la mise sous contrainte est faible, voire nulle. En effet, une mise sous contrainte élevée des plaques P1 et P2 entre elles après leur préassemblage augmenterait l'effort nécessaire à développer par l'utilisateur, souvent manuellement, pour l'insertion de la tête 12 dans la plaque P2. Le montage serait alors très difficile, voire impossible.

Ainsi, conformément à l'invention, le dispositif d'assemblage comporte des moyens de serrage rapprochant automatiquement la plaque P1 et la plaque P2 lors du verrouillage de l'assemblage, lesdits moyens de serrage étant obtenus grâce aux caractéristiques suivantes prises seules ou en combinaison :
- une rampe supérieure 33 est agencée dans chaque extrémité extérieure 12a, 12b de la tête 12 pour venir en appui sur le contour de l'orifice 32 de la deuxième plaque P2 pendant le verrouillage,
- une rampe inférieure 34 est agencée dans chaque extrémité extérieure 11a, 11 b du pied 11 pour venir en appui sur le contour de l'orifice 28 de la première plaque P1 pendant le verrouillage.

Ainsi, pendant le verrouillage, la première plaque P1 se rapproche de la tête 12 et la deuxième plaque P2 se rapproche du pied. Dans son mouvement, la première plaque P1 oblige le plus grand cercle de la collerette 22 à se rapprocher du disque transversal 21 par rapport à sa position après le préassemblage du pied 11 sur la première plaque P1.

Les rampes supérieures 33 et inférieures 34 se prolongent chacune par une portion plane, respectivement 35 et 36, s'étendant parallèlement au disque transversal 21 et destinée à venir en contact respectivement avec la plaque P2 et avec la plaque P1 après le verrouillage. La présence des portions planes 35 et 36 permet d'éviter la présence d'un couple de rappel qui s'appliquerait sur le corps allongé après verrouillage, pour une meilleure stabilité de l'assemblage dans le temps.

La distance entre les deux plaques P1 et P2 après verrouillage est donc déterminée par la distance séparant axialement les portions planes 35 et 36. Généralement, l'assemblage après verrouillage comporte des moyens d'entretoisement (non représentés) déportés du dispositif d'assemblage. Ces moyens d'entretoisement sont obtenus par exemple par des pièces intercalées entre les plaques P1 et P2 ou par la forme des plaques P1 et P2 elles-mêmes. Les moyens de serrage précédemment décrits permettent une mise sous contrainte des plaques P1 et P2 contre les moyens d'entretoisement, pour une meilleure rigidité de l'assemblage et une fiabilisation du maintien. La mise sous contrainte est d'une part permanente tant que le dispositif d'assemblage est verrouillé, et d'autre part élevée grâce à une facilité de mise en oeuvre (simultanément au verrouillage lui-même).

En référence à la figure 6, la portion du corps allongé 10 reliant le pied 11 et le disque transversal 21 soutenant la collerette 22 comporte une section ayant deux quarts de cercle C1 et C2, symétriques par rapport à l'axe D du corps allongé 10, et raccordés par deux angles droits A1 et A2. Les deux quarts de cercle C1 et C2 appartiennent à leur cercle de construction P, dont le diamètre est tout juste inférieur à la largeur de l'orifice 28 de la première plaque P1. La portion du corps allongé 10 reliant le pied 11 et le disque transversal 21 présente donc deux surfaces de butée S11 et S12 formant entre elles l'angle droit A1, et deux surfaces de butée S21 et S22 formant entre elles l'angle droit A2. Les surfaces de butée S11 et S21 viennent conjointement en contact avec les parois de l'orifice 28 pour s'opposer à la rotation du corps allongé 10 dans une première position (représentée sur la figure 6), de même que les surfaces de butée S12 et S22 dans une deuxième position (non représentée). La course angulaire autorisée du corps allongé 10 entre les première et deuxième position est un quart de tour. Dans l'exemple, après l'étape de préassemblage des plaques P1 et P2 entre elles, les surfaces de butée S12 et S22 sont en appui contre les parois de l'orifice 28 pour interdire la rotation anti-horaire du corps allongé 10. La rotation horaire du corps allongé 10 est par contre autorisée, avec un guidage grâce aux quarts de cercle C1 et C2, jusqu'à une mise en contact des surfaces de butée S11 et S21. Dans cette position, l'assemblage est verrouillé et la rotation horaire est alors interdite. Par contre, la rotation anti-horaire se trouve autorisée pour permettre le déverrouillage du dispositif d'assemblage. Cette caractéristique du corps allongé 10 est destinée à faciliter à l'opérateur les opérations de verrouillage et de déverrouillage.

Dans l'exemple, l'amorce de la rampe inférieure 34 est décalée axialement par rapport à la portion transversale 27b de l'ailette de maintien 27. Une fraction de la portion du corps allongé 10 logée dans l'épaisseur e2 de la plaque P1, après le préassemblage sur cette dernière, possède la section du pied 11, afin d'interdire toute rotation intempestive du corps allongé 10, sauf à un passage à force. La valeur du couple à transmettre effectivement sur la languette 13, lors du verrouillage, pour autoriser la rotation du corps allongé 10, est inférieure audit passage à force, à cause de l'effort de pression simultané exercé par l'utilisateur sur la tête 12 qui tend à rapprocher la première plaque P1 de l'amorce de la rampe inférieure 34.

Dans le mode de réalisation des figures 1 à 6, et de manière non limitative, des entailles 37 sont pratiquées dans la jonction 20 entre la tête 12 et le pied 11, pour le dégagement de deux pattes 38 s'étendant parallèlement à la tête 12. Les pattes 38 sont obtenues dans un matériau élastiquement déformable, et raccordées à la jonction 20 sur une arête des entailles 37 parallèle à l'axe D. Les pattes 38, agencées symétriquement par rapport à l'axe D, sont donc mobiles dans la direction transversale pour venir se loger dans les entailles 37. Comme l'illustre la figure 4, les pattes 38 s'étendent tangentiellement aux parois opposées de l'orifice 32 de la deuxième plaque P2 après le préassemblage des plaques P1 et P2. Pendant le verrouillage, les pattes 38 sont cintrées transversalement par les parois de l'orifice 32 pour autoriser la rotation du corps allongé 10. Une fois la rotation terminée, les pattes 38 reprennent leur position initiale sous l'effet du retour élastique de la matière. Les pattes 38 sont alors perpendiculaires aux parois de l'orifice 32, en appui contre lesdites parois au niveau de leurs extrémités. Les pattes 38 s'opposent ainsi à toute possibilité de rotation du corps allongé 10 dans le sens du déverrouillage.

## Revendications

1. Dispositif d'assemblage d'une première plaque (P1) et d'une deuxième plaque (P2) superposée, comportant un corps allongé (10) muni d'un pied (11) et d'une tête (12) comprenant des moyens de retenue (29) de la deuxième plaque (P2), le corps allongé (10) étant destiné à traverser axialement un orifice (28, 32) prévu dans chaque plaque (P1, P2), et étant équipé de moyens de verrouillage (11a, 11b, 12a, 12b) actionnés en rotation, de moyens de clipsage (22, 27) du pied (11) sur la première plaque (P1) et de moyens de serrage (33, 34) rapprochant automatiquement les première et deuxième plaques (P1, P2) lors du verrouillage de l'assemblage par rotation du corps allongé (10) **caractérisé en ce que** :
- les moyens de clipsage (22, 27) comportent une butée axiale (22) solidaire du corps allongé (10) et au moins une ailette de maintien (27) élastiquement déformable dans la direction transversale, la butée axiale (22) et l'ailette de maintien (27) étant destinées à venir respectivement en appui sur les faces opposées de la première plaque (P1), et
- les moyens de retenue (29) de la deuxième plaque (P2) comportent au moins un ergot (29) relié à la tête (12) par une zone de jonction (Z) déformable élastiquement.

2. Dispositif selon la revendication 1, **caractérisé.en ce que** la butée axiale (22) est une collerette (22) saillante en périphérie du corps allongé (10) et élastiquement déformable dans la direction axiale.

3. Dispositif selon l'une quelconque des revendications 1 et 2, **caractérisé en ce que** les moyens de verrouillage (11a, 11b, 12a, 12b) comportent :
- un pied (11) de section oblongue correspondant à l'orifice (28), lui-même oblong, de la première plaque (P1),
- une tête (12) de section oblongue correspondant à l'orifice (32) , lui-même oblong, de la deuxième plaque (P2).

4. Dispositif selon la revendication 3, **caractérisé en ce que** les moyens de serrage (33, 34) comportent une rampe supérieure (33) agencée dans au moins une extrémité extérieure (12a, 12b) de la tête (12) et destiné à venir en appui sur la deuxième plaque (P2) pendant le verrouillage.

5. Dispositif selon la revendication 4, **caractérisé en ce que** la rampe supérieure (33) se prolonge par une portion plane (35) destinée à venir en contact avec la deuxième plaque (P2) après verrouillage.

6. Dispositif selon l'une quelconque des revendications 3 à 5, **caractérisé en ce que** les moyens de serrage (33, 34) comportent une rampe inférieure (34) agencée dans au moins une extrémité extérieure (11a, 11b) du pied (11) et destiné à venir en appui sur la première plaque (P1) pendant le verrouillage.

7. Dispositif selon la revendication 6, **caractérisé en ce que** la rampe inférieure (34) se prolonge par une portion plane (36) destinée à venir en contact avec la première plaque (P1) après verrouillage.

8. Dispositif selon l'une des revendications 6 ou 7, **caractérisé en ce que** l'amorce de la rampe inférieure (34) est décalée axialement par rapport à l'ailette de maintien (27) des moyens de clipsage (22,27).

9. Dispositif selon l'une quelconque des revendications 1 à 8, **caractérisé en ce que** la portion du corps allongé (10) reliant le pied (11) et la butée axiale (22) des moyens de clipsage (22, 27) comporte une section ayant deux quarts de cercle (C1, C2) symétriques par rapport à l'axe (D) du corps allongé (10) et raccordés par deux angles droits (A1, A2).

10. Dispositif selon l'une quelconque des revendications 3 à 9, **caractérisé en ce que** les extrémités extérieures (12a, 12b) de la tête (12) comportent des portions biseautées (16, 17) et convergentes.

11. Dispositif selon l'une quelconque des revendications précédentes. **caractérisé en ce que** le décalage axial (e1) séparant, au repos, la butée axiale (22) et l'ailette de maintien (27) des moyens de clipsage (22, 27) est destiné à être légèrement inférieure à l'épaisseur (e2) de la première plaque (P1).

12. Dispositif selon l'une quelconque des revendications précédentes, **caractérisé en ce que** la tête (12) et le pied (11) sont reliés par une jonction (20) comportant au moins une patte (38) obtenue dans un matériau élastiquement déformable, mobile dans la direction transversale, et adaptée pour s'étendre tangentiellement à l'orifice (32) de la deuxième plaque (P2) avant le verrouillage, pour se cintrer pendant le verrouillage afin d'autoriser la rotation du corps allongé (10), et pour s'opposer à la rotation du corps allongé (10) dans le sens du déverrouillage.

## Claims

1. Device for joining a first plate (P1) and a second plate (P2) that are superposed, including an elongate body (10) that has a foot (11) and a head (12) comprising means (29) for retaining the second plate (P2), the elongate body (10) being adapted to pass axially through an orifice (28, 32) in each plate (P1, P2), and being equipped with locking means (11a, 11b, 12a, 12b) that are operated in rotation, means (22, 27) for clipping the foot (11) to the first plate (P1) , and clamping means (33, 34) for automatically moving the first and second plates (P1, P2) toward each other on locking of the assembly by rotating the elongate body (10), **characterised in that**:
- the clipping means (22, 27) include an axial abutment (22) fastened to the elongate body (10) and at least one retaining fin (27) that is elastically deformable in the transverse direction, the axial abutment (22) and the retaining fin (27) being adapted to come to bear on respective opposite faces of the first plate (P1), and
- the means (29) for retaining the second plate (P2) include at least one lug (29) connected to the head (12) by an elastically-deformable joining area (Z).

2. Device according to claim 1, **characterised in that** the axial abutment (22) is a projecting flange (22) at the periphery of the elongate body (10) that is elastically deformable in the axial direction.

3. Device according to either of claims 1 and 2,
**characterised in that** the locking means (11a, 11b, 12a, 12b) include:
- a foot (11) of oblong section corresponding to the orifice (28) in the first plate (P1), which is itself oblong,
- a head (12) of oblong section corresponding to the orifice (32) in the second plate (P2), which is itself oblong.

4. Device according to claim 3, **characterised in that** the clamping means (33, 34) include an upper ramp (33) on at least one outside edge (12a, 12b) of the head (12) that is adapted to come to bear on the second plate (P2) during locking.

5. Device according to claim 4, **characterised in that** the upper ramp (33) is extended by a plane portion (35) adapted to come into contact with the second plate (P2) after locking.

6. Device according to any one of claims 3 to 5, **characterised in that** the clamping means (33, 34) include a lower ramp (34) on at least one outside edge (11a, 11b) of the foot (11) that is adapted to come to bear on the first plate (P1) during locking.

7. Device according to claim 6, **characterised in that** the lower ramp (34) is extended by a plane portion (36) adapted to come into contact with the first plate (P1) after locking.

8. Device according to either of claims 6 or 7,
**characterised in that** the root of the lower ramp (34) is offset axially relative to the retaining fin (27) of the clipping means (22, 27).

9. Device according to any one of claims 1 to 8, **characterised in that** the portion of the elongate body (10) connecting the foot (11) and the axial abutment (22) of the clipping means (22, 27) includes a section having two quarter-circles (C1, C2) symmetrical with respect to the axis (D) of the elongate body (10) and connected by two right angles (A1, A2).

10. Device according to any, one of claims 3 to 9,
**characterised in that** the outside wedges (12a, 12b) of the head (12) include convergent bevelled portions (16, 17).

11. Device according to any one of the preceding claims, **characterised in that** the axial offset (e1) separating the axial abutment (22) and the retaining fin (27) of the clipping means (22, 27) at rest is intended to be slightly less than the thickness (e2) of the first plate (P1).

12. Device according to any one of the preceding claims, **characterised in that** the head (12) and the foot (11) are connected by a junction (20) including at least one lug (38) produced in an elastically-deformable material, mobile in the transverse direction and adapted to extend tangentially to the orifice (32) in the second plate (P2) before locking, to bend during locking to allow rotation of the elongate body (10), and to oppose rotation of the elongate body (10) in the unlocking direction.

## Patentansprüche

1. Vorrichtung zum Zusammenbau einer ersten Platte (P1) und einer darüber angeordneten zweiten Platte (P2) mit einem gestreckten Körper (10), der mit einem Fuß (11) und mit einem Kopf (12) ausgestattet ist, welcher Rückhaltemittel (29) für die zweite Platte (P2) aufweist, wobei der gestreckte Körper (10) dazu eingerichtet ist, axial eine in jeder Platte (P1, P2) ausgebildete Ausnehmung (28, 32) zu queren, und mit unter Drehung betätigbaren Verriegelungsmitteln (11a, 11 b, 12a, 12b), mit Verrastmitteln (22, 27) des Fußes (11) an der ersten Platte (P1) und mit Festziehmittel (33, 34) ausgestattet ist, die bei der Verriegelung des Zusammenbaus durch Drehung des gestreckten Körpers (10) automatisch die erste und die zweite Platte (P1, P2) einander annähern, **dadurch gekennzeichnet, dass**
- die Verrastmittel (22, 27) einen einstückig mit dem gestreckten Körper (10) ausgebildeten axialen Anschlag (22) und wenigstens einen in der Querrichtung elastisch verformbaren Halteflügel (27) aufweisen, wobei der axiale Anschlag (22) und der Halteflügel (27) dazu eingerichtet sind, jeweils an der ersten Platte (P1) gegenüberliegenden Seiten zur Anlage zu kommen, und
- die Rückhaltemittel (29) der zweiten Platte (P2) über wenigstens einen Zapfen (29) verfügen, der über einen elastisch verformbaren Verbindungsbereich (Z) mit dem Kopf (12) verbunden ist.

2. Vorrichtung nach Anspruch 1, **dadurch gekennzeichnet, dass** der axiale Anschlag (22) ein Kragen (22) ist, der über den Rand des gestreckten Körpers (10) vorspringt und in der Axialrichtung elastisch verformbar ist.

3. Vorrichtung nach einem der Ansprüche 1 oder 2, **dadurch gekennzeichnet, dass** die Verriegelungsmittel (11a, 11 b, 12a, 12b)
- einen Fuß (11) mit einem länglichen Querschnitt aufweisen, der der Ausnehmung (28) der ersten Platte (P1), die selbst länglich ist, entspricht, und
- über einen Kopf (12) mit einem länglichen Querschnitt verfügen, der der Ausnehmung (32) der zweiten Platte (P2), die selbst länglich ist, entspricht.

4. Vorrichtung nach Anspruch 3, **dadurch gekennzeichnet, dass** die Festziehmittel (33, 34) eine obere Rampe (33) aufweisen, die an wenigstens einem äußeren Ende (12a, 12b) des Kopfes (12) ausgebildet und dazu eingerichtet ist, während der Verriegelung an der zweiten Platte (P2) zur Anlage zu kommen.

5. Vorrichtung nach Anspruch 4, **dadurch gekennzeichnet, dass** die obere Rampe (33) durch einen planen Abschnitt (35) verlängert ist, der dazu eingerichtet ist, nach Verriegelung mit der zweiten Platte (P2) in Kontakt zu kommen.

6. Vorrichtung nach einem der Ansprüche 3 bis 5, **dadurch gekennzeichnet, dass** die Verriegelungsmittel (33, 34) eine untere Rampe (34) aufweisen, die an wenigstens einem äußeren Ende (11 a, 11 b) des Fußes (11) ausgebildet und dazu eingerichtet ist, während der Verriegelung an der ersten Platte (P1) zur Anlage zu kommen.

7. Vorrichtung nach Anspruch 6, **dadurch gekennzeichnet, dass** die untere Rampe (34) durch einen planen Abschnitt (36) verlängert ist, der dazu eingerichtet ist, nach der Verriegelung mit der ersten Platte (P1) in Kontakt zu kommen.

8. Vorrichtung nach einem der Ansprüche 6 oder 7, **dadurch gekennzeichnet, dass** der Ansatzbereich der unteren Rampe (34) axial in Bezug auf den Halteflügel (27) der Verrastmittel (22, 27) versetzt ist.

9. Vorrichtung nach einem der Ansprüche 1 bis 8, **dadurch gekennzeichnet, dass** der den Fuß (11) und den axialen Anschlag (22) der Verrastmittel (22, 27) verbindende Abschnitt des gestreckten Körpers (10) einen Querschnitt aufweist, der zwei Viertel des Kreises (C1, C2) entspricht, die symmetrisch in Bezug auf die Achse (D) des gestreckten Körpers (10) liegen und durch zwei rechtwinklige Winkelstücke (A1, A2) angebunden sind.

10. Vorrichtung nach einem der Ansprüche 3 bis 9, **dadurch gekennzeichnet, dass** die äußeren Enden (12a, 12b) des Kopfes (12) abgeschrägte und konvergierende Abschnitte (16, 17) aufweisen.

11. Vorrichtung nach einem der vorangehenden Ansprüche, **dadurch gekennzeichnet, dass** der axiale Versatz (e1), der in Ruheanordnung den axialen Anschlag (22) und den Hatteflügel (27) der Verrastmittel (22, 27) voneinander trennt, dazu eingerichtet ist, geringfügig kleiner als die Dicke (e2) der ersten Platte (P1) zu sein.

12. Vorrichtung nach einem der vorangehenden Ansprüche, **dadurch gekennzeichnet, dass** der Kopf (12) und der Fuß (11) durch einen Verbindungsabschnitt (20) verbunden sind, der wenigstens eine Lasche (38) aufweist, die aus einem elastisch verformbaren Material hergestellt, in der Querrichtung beweglich und dazu eingerichtet ist, sich vor der Verriegelung tangential zu der Ausnehmung (32) der zweiten Platte (P2) zu erstrecken, um sich während der Verriegelung zu verbiegen, um die Drehung des gestreckten Körpers (10) zu gestatten, und um sich der Drehung des gestreckten Körpers (10) in der Entriegelungsrichtung zu widersetzen.
